# EUROPÄISCHE PATENTSCHRIFT

(11) **EP 2 521 606 B1**
(45) Veröffentlichungstag und Bekanntmachung des Hinweises auf die Patenterteilung: **22.11.2017**
(21) Anmeldenummer: 11701631.1
(22) Anmeldetag: 07.01.2011
(51) Int. Cl.: C02F 1/44, B01D 63/08, B01D 63/16, C02F 101/16, C02F 103/06, C02F 103/20

(54) **ANTRIEBSVORRICHTUNG FÜR EINE MEMBRANFILTRATIONSEINRICHTUNG**
DRIVE DEVICE FOR A MEMBRANE FILTRATION ARRANGEMENT
DISPOSITIF D'ENTRAÎNEMENT POUR UN APPAREIL DE FILTRATION À MEMBRANE

(30) Priorität: 08.01.2010 DE 202010000751 U
(43) Veröffentlichungstag der Anmeldung: 14.11.2012
(73) Patentinhaber: Big Dutchman International GmbH, 49377 Vechta (DE)
(72) Erfinder: WESSELMANN, Reinhold, 49661 Cloppenburg (DE); SCHWARZ, Armin, Vechta 49377 (DE)
(74) Vertreter: Eisenführ Speiser
(86) Internationale Anmeldenummer: PCT/EP2011/050184
(87) Internationale Veröffentlichungsnummer: WO 2011/083148

(56) Entgegenhaltungen:
- KR-A- 20030 016 721
- US-A- 4 289 630
- US-A- 4 952 317
- US-B1- 6 322 698

## Beschreibung

Die Erfindung betrifft eine Membranfiltrationsvorrichtung, umfassend Vielzahl von ebenen Membranfilterelementen, die zu einem Membranpaket verbunden und innerhalb des Membranpakets parallel und beabstandet zueinander angeordnet sind, eine das Membranpaket allseits umschließende Wandung, innerhalb welcher zumindest ein stromaufwärts von den Membranfilterelementen liegender Einlassraum ausgebildet ist, der mit zumindest einer Einlassöffnung zum Zuführen einer zu filternden Flüssigkeit in Verbindung steht, und zumindest ein stromabwärts von den Membranfilterelementen liegender Auslassraum ausgebildet ist, der mit zumindest einer Auslassöffnung zum Abführen eines durch Filterung entstehenden gefilterten Anteils der Flüssigkeit in Verbindung steht, eine Schwingungseinheit, welche mit dem Membranpaket und der Wandung verbunden ist, um diese in einer Richtung in Schwingungen zu versetzen, die parallel zu den Membranfilterelementen verlaufen. Ein weiterer Aspekt der Erfindung ist ein Verfahren zur Separierung von biologisch belasteten Abwässern im landwirtschaftlichen Bereich.

Ein zentrales Problem der modernen Landwirtschaft ist die Aufbereitung schadstoffbelasteter Abwässer. Durch erhöhte Umweltauflagen kommen bisher verbreitete Verfahren, wie die großflächige Ausbringung solcher schadstoffbelasteter Abwässer auf Feldern aufgrund der damit verbundenen hohen Nitratbelastung des Grundwassers nur noch sehr begrenzt oder gar nicht in Betracht. Es sind daher Verfahren erforderlich, um solche schadstoffbelasteten Abwässer in effizienter Weise solcher Art aufzubereiten, dass sie den gestiegenen Umweltanforderungen genügen und im Idealfall als normales Abwasser entsorgt werden dürfen.

Um dies zu erreichen, ist beispielsweise die Möglichkeit gegeben, die Abwässer in einer Kläranlage aufzubereiten. Allerdings ist dies mit einem hohen apparativen Aufwand verbunden, daher kostspielig und zudem wartungsintensiv. Die Aufbereitung in einer Kläranlage stellt daher keinen wirtschaftlichen Weg dar, um in der Landwirtschaft anfallende biologisch belastete Abwässer aufzubereiten.

Grundsätzlich ist aus einem anderen technischen Bereich eine im labortechnischen Maßstab nutzbare Filtertechnologie zur Behandlung kolloidaler Suspensionen aus US 4,952,317 bekannt. Hierbei handelt es sich um eine Membranfiltrationsvorrichtung, bei der ein aus mehreren parallel angeordneten Membranen zusammengesetztes Membranpaket in eine Schwingung versetzt wird, deren Schwingungsrichtung parallel zur Oberfläche der Membranen liegt. Hierdurch wird zwischen der Membranoberfläche und der zu filternden Kolloidalsuspension eine Scherkraft erzeugt, die das Zusetzen der Membran mit Festpartikeln verhindert und hierdurch einen über eine gewisse Betriebsdauer funktionierenden Filtrationsbetrieb ermöglicht.

Der Erfinder der vorliegenden Vorrichtung und des vorliegenden Verfahrens hat erkannt, dass sich dieses Membranfiltrationsprinzip grundsätzlich auch dafür eignet, um mit biologischen Schadstoffen belastete Abwässer im landwirtschaftlichen Bereich zu filtern. Allerdings haben sich in der Anwendung der in US 4,952,317 beschriebenen Vorrichtung Probleme ergeben, die keinen effizienten Betrieb für diese Art von Abwässern der Vorrichtung ermöglichten. So werden für die dort gezeigte Vorrichtung verschiedene Möglichkeiten beschrieben, um das Membranpaket in Schwingungen zu versetzen. Darunter sind reziprokale translatorische oder zirkulare Schwingungen, die durch Antriebseinrichtungen unmittelbar auf das Membranpaket ausgeübt werden. Bei diesen Antriebseinrichtungen handelt es sich entweder um mit einer starren Kinematik konstruierte Drehaktuatoren oder elektromechanische torsionale Resonatoren. Diese sind solcher Art starr mit dem Membranpaket verbunden, dass eine innerhalb dieser Vibrationseinheiten erzeugte Vibration unmittelbar auf das Membranpaket übertragen werden soll. Es hat sich gezeigt, dass hierdurch keine effiziente Membranfiltration von biologisch belasteten Abwässern im landwirtschaftlichen Bereich erzielt wird, da entweder der Energieeinsatz für die Membranfiltration zu hoch oder die Betriebsdauer der Membranfiltrationsvorrichtung zwischen einem erforderlichen Wechsel sämtlicher Membranfilter zu kurz bemessen ist.

Aus US 6,322,698 B1 ist eine weitere Membranfiltrationsvorrichtung bekannt, welche ein Membranpaket aufweist, das mittels eines Antriebsmechanismus in eine Vibrationsbewegung versetzt wird, um die Filtration zu verstärken. Während auch in dieser Vorveröffentlichung ein nach dem der Erfindung zugrundeliegenden Absatz ein zur Filtration biologisch belasteter Abwässer im landwirtschaftlichen Bereich geeignetes System beschrieben wird, gibt die Veröffentlichung keine Hinweise, wie dieses System solcher Art fortgebildet werden könnte, um einen wirtschaftlich effizienten Betrieb bei der Membranfiltration solcher Abwässer zu ermöglichen.

Aus US 7, 297, 278 B2 ist eine Membranfiltrationsvorrichtung bekannt, welche unter Zugabe von Ausfällungsmitteln (precipitators) eine Trennung von Metallen und Wasser bewirken soll. Nachteilig an dieser Vorrichtung ist allerdings die dafür erforderliche Zugabe von Ausfällungsmitteln, die es erschwert, den Prozess kontinuierlich durchzuführen und zudem aufgrund der erforderlichen Zugabe von Verbrauchsmitteln in Form der Ausfällungsmittel die wirtschaftliche Effizienz des Verfahrens verringert.

Aus US 4, 289, 630 ist ein Druckfilter vorbekannt, der einen Verteiler mit daran angeschlossenen Filterröhren aufweist. Ein Auslassverteiler ist an diesen Filterröhren angeschlossen und federbelastet. Der Auslassverteiler wird entlang einer vertikalen Achse vibriert, um Filterkuchen von den Filterröhren abzulösen.

Aus KR 2003 0016721 A ist ein Verfahren zur Reinigung von biologischen belasteten Abwässern aus der landwirtschaftlichen Nutztierhaltung bekannt. Hierbei wird eine VSEP Membranfiltrationsvorrichtung eingesetzt.

Es ist daher Aufgabe der Erfindung, eine Vorrichtung zur Reinigung biologisch belasteter Abwässer im landwirtschaftlichen Bereich bereitzustellen, welche in wirtschaftlich effizienter Weise betrieben werden kann.

Diese Aufgabe wird erfindungsgemäß mit einer Vorrichtung der eingangs genannten Art gelöst, bei welcher die Schwingungseinheit mit einem Rahmen verbunden ist, der das Membranpaket umgibt und der mittels zumindest einer Feder, deren Hauptrichtung der Federwirkung sich parallel zur Ebene der Membranfilter erstreckt, mit der Wandung des Membranpakets verbunden ist.

Die zumindest eine Feder kann insbesondere eine Schraubenfeder sein, die sich parallel zu der Ebene der Membranfilterelemente erstreckt. Alternativ können auch Blattfedern, Spiralfedern, Tellerfedern oder dergleichen verwendet werden.

Mit der erfindungsgemäßen Membranfiltrationsvorrichtung wird eine Fortbildung der bekannten Membranfiltrationsvorrichtungen vorgeschlagen, welche durch eine spezifische Ausgestaltung und Ankopplung der Schwingungseinheit an das Membranpaket eine effiziente Schwingung des Membranpakets auch bei unterschiedlichen Beladungszuständen ermöglicht. Hierbei ist der Energieeinsatz, der für die Schwingung aufgebracht werden muss, im Vergleich zu den bekannten Vorrichtungen erheblich niedriger bei gleichzeitig erhöhter Schwingamplitude. Ein hierfür technisch relevantes Merkmal ist der Einsatz einer oder mehrerer Federn, welche das Membranpaket mit einem äußeren

Rahmen koppeln, der das Membranpaket umgibt. Die Schwingungseinheit ihrerseits ist mit dem Rahmen verbunden. Durch diese Art der Ankopplung wird eine starre Kopplung zwischen Schwingungseinheit und Membranpaket vermieden. Stattdessen wird das Membranpaket selbst in Verbindung mit der zumindest einen Feder als Schwingungssystem ausgebildet, welches eine Resonanzfrequenz hat. Diese Resonanzfrequenz wird gemäß der Erfindung solcher Art ausgebildet, dass bei ihr ein besonders wirksamer Aufbau von Scherkräften auf den Membranoberflächen erreicht wird und hierdurch die Membranfiltration besonders wirksam stattfinden kann.

Erfindungsgemäß sind mehrere Federn vorgesehen, deren Kraftwirkungsrichtung sich parallel zur Ebene der Membranfilterelemente erstreckt, insbesondere indem die Federn sich parallel zur Ebene der Membranfilterelemente erstrecken, und die an ihrem einen Ende mit der Wandung des Membranpakets verbunden sind und an ihrem anderen Ende mit dem Rahmen verbunden sind, wobei die Federn in zumindest einen ersten Satz und einen zweiten Satz von Federn aufgeteilt sind und innerhalb jedes Satzes von Federn alle Federn parallel zueinander verlaufen und die Richtung der Federn eines Satzes schräg, vorzugsweise senkrecht zur Richtung der Federn eines anderen Satzes verläuft. Mit dieser Fortbildung wird das erfindungsgemäße Prinzip dahingehend weiter verbessert, dass durch die Bereitstellung von mehreren Federn, die in zumindest zwei Sätze aufgeteilt sind, die Führung des Membranpakets in der gewünschten Schwingungsrichtung durch die Federn verbessert oder sogar vollständig bereitgestellt werden können. Dabei ist zu verstehen, dass sich die Federn eines Satzes parallel nebeneinander in einer Ebene oder in mehreren Ebenen zueinander angeordnet sein können. Durch die Anordnung und Aufteilung der Federn kann einerseits ein mechanisch bestimmtes System hergestellt werden, welches eine Schwingung in definierter Richtung und Amplitude ausführt.

Grundsätzlich ist hierbei zu verstehen, dass zur Realisierung der erfindungsgemäßen Vorteile und Wirkungen Federn unterschiedlicher Bauweisen eingesetzt werden können. So können bevorzugt beispielsweise Schraubenfedern eingesetzt werden, der Kraftwirkunsgrichtung der Erstreckungsrichtung der Federn entspricht. Alternativ können aber auch andere Federarten, beispielsweise Blattfedern, Tellerfedern oder dergleichen eingesetzt werden, die ebenfalls über eine geradlinige Kraftwirkungsrichtung oder eine angenähert geradlinige Kraftwirkungsrichtung verfügen. Schließlich können auch Federarten eingesetzt werden, die eine Torsionskraftwirkung um eine Achse verfügen, wie beispielsweise Spiralfedern oder Drehstabfedern, die folglich eine entsprechende mechanische Anlenkung benötigen, um in der erfindungsgemäßen Vorrichtung eingesetzt zu werden.

Dabei ist unter einer parallelen Anordnung der Federn insbesondere eine parallele Anordnung der Kraftwirkungslinien der Federn auf das Membranpaket zu verstehen, gegebenenfalls unter Berücksichtigung entsprechender Umlenkungsmechanismen. Die federn können hierbei räumlich ebenfalls parallel ausgerichtet sein, bei bestimmten Federarten aber auch abweichend hiervon räumlich angeordnet sein.

Durch eine Anordnung der Federn der zwei Sätze in einem Winkel von 90° zueinander lässt sich hierdurch eine definierte Schwingungsbewegung mit stets gleich bleibender Amplitude realisieren. Werden hingegen die beiden Sätze in einer hiervon abweichenden, schrägen Anordnung zueinander angeordnet, kann ein mehrfach unbestimmtes mechanisches System ausgebildet werden, welches Schwingungen unterschiedlicher Amplitude in aufeinanderfolgenden Schwingungsabfolgen ausführt. Je nach dem, welche Art von Abwässern behandelt werden sollen, insbesondere abhängig von der Dichte der Abwässer und ihrer Belastung mit Feststoffpartikeln, kann sich die eine oder die andere Anordnung der Sätze von Federn zueinander als bevorzugt darstellen. Insbesondere ist es bevorzugt, die Schraubenfedern in insgesamt vier Sätze aufzuteilen, von denen jeweils zwei Sätze parallel und beabstandet zueinander sind und jeder Satz solcherart in einem Winkel von 90° zu einem anderen Satz steht, dass die Sätze im Querschnitt ein Rechteck bilden.

Noch weiter ist es bevorzugt, dass die Federkonstante und die Länge sowie die Anzahl der Federn und die Schwingungseinheit solcherart auf die Masse des Membranpakets abgestimmt sind, dass die Schwingungseinheit das aus der zumindest einen Feder und dem Membranpaket gebildete Schwingungssystem in eine Schwingung bei einer seiner Resonanzfrequenzen bringen kann. Durch diese Art der Ausgestaltung kann das Membranpaket in einer Resonanzfrequenz zur Schwingung gebracht werden, was einen besonders geringen Energieaufwand zur Erzielung einer besonders hohen Schwingungsamplitude erzielt.

Dabei ist es besonders bevorzugt wenn, dass die Vorspannung, die Federkonstante, die wirksame Anzahl und/oder die wirksame Länge der Federn zwischen Rahmen und Membranpaket einstellbar ist, um die Resonanzfrequenz des durch die zumindest eine Feder und das Membranpaket gebildeten Schwingungssystem einstellen zu können. Durch diese Fortbildung kann eine für die Membranfiltration besonders wirkungsvolle Resonanzfrequenz eingestellt werden und dies im laufenden Betrieb solcher Art erfolgen, dass die Schwingungscharakteristika in Abhängigkeit von unterschiedlichen Beladungszuständen, wie beispielsweise verursacht durch unterschiedliche Mengen oder Dichten des zu filternden Mediums, angepasst werden können. Dies kann in einfachster Weise durch Ein- oder Auskoppeln von Federn erfolgen. In einer anderen Ausgestaltung kann die wirksame Länge der Federn durch teilweise Blockierung verändert werden. Es ist zu verstehen, dass die unterschiedlichen Möglichkeiten zur Einstellung einer gewünschten Resonanzfrequenz des Schwingungssystems einerseits durch einzelne Maßnahmen der zuvor beschriebenen Art oder durch eine Kombination solcher Maßnahmen erreicht werden kann.

Noch weiter ist es bevorzugt, wenn das Membranpaket mittels Zugelementen, vorzugsweise Drahtseilen, innerhalb des Rahmens aufgehängt ist, welche die Gewichtskraft des Membranpakets auf den Rahmen übertragen. Mit dieser Ausgestaltung wird eine für die gewünschte Resonanzwirkung besonders günstige Art der Lasttragung des Membranpakets bereitgestellt, die zudem in einfacher Weise für Wartungszwecke ein Herausbewegen des Membranpakets aus dem Rahmen und eine Demontage ermöglicht. Die Zugelemente können sich insbesondere von der Oberkante des Membranpakets zu darüberliegenden Rahmenstreben erstrecken. Die Zugelementaufhängung kann einerseits eine Resonanzschwingungsbewegung in der gewünschten Ebene durch entsprechende Aufhängungspunkte und Zugelementlängen ermöglichen. Andererseits ist die Dämpfungswirkung einer solchen Zugelementaufhängung im praktischen Einsatz vernachlässigbar, was eine langlebige Aufhängung und zugleich einen geringen Energieeinsatz für die Schwingung ermöglicht.

Die erfindungsgemäße Membranfiltrationsvorrichtung kann weiter fortgebildet werden durch ein oder mehrere Dämpfungselemente, welche an der Unterseite des Rahmens angeordnet sind zum Anordnen der Membranfiltrationsvorrichtung auf einer Bodenfläche. Unter Dämpfungselementen soll in diesem Zusammenhang ein Element verstanden werden, welches kein rein elastisches, sondern ein zumindest viskoelastisches Verhalten aufweist, d.h. insbesondere eine verformungsgeschwindigkeitsabhängige Steifigkeit. Mit dieser Ausgestaltung wird es insbesondere möglich, die erfindungsgemäße Membranfiltrationsvorrichtung auf einer Bodenfläche anzuordnen, ohne dass durch die Schwingungen des Membranpakets Störungen auf benachbart aufgestellte Vorrichtungen ausgeübt werden.

Noch weiter ist es bevorzugt, dass die Schwingungsvorrichtung einen Motor umfasst, der eine Welle antreibt, an der ein exzentrisches Gewicht angeordnet ist und dass der Motor vorzugsweise über eine Verbindung, deren Federkonstante um zumindest eine, vorzugsweise mehrere Größenordnungen steifer ist als die Federkonstante der zumindest einen Feder bzw. der Summe von Federn zwischen Rahmen und Membranpaket, mit dem Rahmen verbunden ist. Mit einer solchen Ausgestaltung wird in einer robusten und konstruktiv sowie fertigungstechnisch kostengünstigen Weise eine Schwingung erregt. Der Motor samt des exzentrischen Gewichts ist hierbei im wesentlichen starr mit dem Rahmen verbunden. Hierbei ist zu verstehen, dass die Steifigkeit der starren Verbindung zwischen Motor und Rahmen in Relation zur Steifigkeit der Verbindung zwischen dem Membranpaket und dem Rahmen betrachtet werden muss. In diesem Verhältnis ist es bevorzugt, wenn die Fehlerkonstante um eine, insbesondere um mehrere Größenordnungen steifer ist in der Verbindung zwischen Rahmen und Schwingungsvorrichtung als in der Verbindung zwischen Rahmen und Membranpaket. Grundsätzlich ist zu verstehen, dass dieses Steifigkeitsverhältnis und die solcher Art als Definition einer starren bzw. steifen Verbindung getroffene Relation für jede Art der Ankopplung einer Schwingungsvorrichtung an den Rahmen anwendbar ist.

Gemäß einer weiteren bevorzugten Ausführungsform ist die zumindest eine Feder, bzw. sind vorzugsweise alle Federn zwischen Rahmen und Membranpaket auf Druck vorgespannt. Durch diese Fortbildung wird einerseits erreicht, dass die Federn auch bei einer Relativbewegung zwischen Membranpaket und Rahmen infolge der hervorgerufenen Schwingung nicht aus einer Druckbelastung in eine Zugbelastung ausgelenkt werden und hierbei einen neutralen Punkt in Form ihrer Nennlänge durchlaufen, wodurch ein insgesamt unruhiges Schwingungsverhalten auftreten würde. Des Weiteren wird durch die Vorspannung der Federn eine tendenziell höhere Resonanzfrequenz erzielt, da insgesamt höhere Kräfte zwischen Rahmen und Membranpaket wirken.

Noch weiter ist es bevorzugt, wenn die Schwingungsvorrichtung einen Motor umfasst, der eine Welle antreibt, an der ein exzentrisches Gewicht angeordnet ist, dessen Exzentrizität verstellbar ist zur Einstellung der Schwingungsamplitude des Membranpakets. Die Verstellung der Exzentrizität eines exzentrischen Gewichts, d.h. die Einstellung unterschiedlicher Radialabstände des Massenschwerpunkts des Gewichts von der Rotationsachse stellt eine effiziente Möglichkeit dar, um die Schwingungsamplitude und damit die Höhe der Scherkräfte zwischen dem zu reinigenden Medium und den Membranoberflächen des Membranpakets einzustellen. Insbesondere kann die Exzentrizität auch zu dem Zweck eingestellt werden, um höhere oder niedrigere Drehzahlen des Motors einzustellen. Hierbei ist zu verstehen, dass die Gesamtbelastbarkeit der Vorrichtung nur bis zu bestimmten Grenzen eine Steigerung der Exzentrizität mit einer gleichzeitigen Erhöhung oder Beibehaltung einer Drehzahl des Motors zulässt. Um die Dauerfestigkeit der Filtrationsvorrichtung nicht zu überschreiten, kann anhand einer Wöhler-Kurve eine maximale Drehzahl für jede Exzentrizität in Abhängigkeit von der Bauteilgestaltung und -dimensionierung angegeben werden. Im Rahmen dieser Verstellmöglichkeiten kann dann für die Erreichung einer bestimmten Resonanzfrequenz und Schwingungsamplitude die Exzentrizität des Gewichts und ggf. auch die Drehzahl des Motors verändert werden.

Die Ausgestaltungen mit einem Motor mit einer Welle mit exzentrischem Gewicht kann weiter dadurch fortgebildet werden, dass die Welle sich senkrecht zur Ebene der Membranfilterelemente erstreckt. Bei dieser Ausgestaltung werden die durch die Bewegung des exzentrischen Gewichts um die Wellenachse erzeugten Schwingungskräfte unmittelbar solcher Art gerichtet, dass sie in einer Ebene parallel zu den Membranfilterelementen wirken, wodurch eine unmittelbare Schwingungserregung in der gewünschten Richtung besonders wirksam erfolgen kann.

Schließlich kann die erfindungsgemäße Membranfiltrationsvorrichtung weiter fortgebildet werden, indem die Gewichtskraft des Membranpakets auf einen oder mehrere Punkte am Rahmen übertragen wird, die in Schwerkraftrichtung oberhalb des Massenschwerpunktes des Membranfilterelements liegt/liegen. Durch diese Ausgestaltung wird eine konstruktiv vorteilhafte Gewichtsübertragung des Membranpakets auf den Rahmen erreicht, die der gewünschten Schwingungsbewegung des Membranpakets keine dämpfenden Wirkungen entgegensetzt und zugleich eine einfache Fertigung und Montage der erfindungsgemäßen Membranfiltrationsvorrichtung ermöglicht.

Schließlich ist es noch weiter bevorzugt, wenn die Schwingungsvorrichtung an einer Seite des Rahmens befestigt ist und an der gegenüberliegenden Seite ein Gegengewicht starr am Rahmen befestigt ist, dessen Masse vorzugsweise der Masse der Schwingungsvorrichtung entspricht. Durch die Befestigung der Schwingungsvorrichtung an einer Seite des Rahmens und die starre Befestigung eines in der Masse vorzugsweise der Schwingungsvorrichtung entsprechenden Gegengewichts an der gegenüberliegenden Seite des Rahmens wird das Schwingungsverhalten des Rahmens und dadurch die Erzeugung der Resonanzschwingung des Membranpakets in wirksamer Weise optimiert und gleichzeitig Beschädigungen des Rahmens durch das Dauerschwingen vermieden. Die starre Verbindung des Gegengewichts kann hierbei vorzugsweise durch unmittelbare Verschweißung oder Verschraubung erfolgen. Sowohl die Schwingungsvorrichtung als auch das Gegengewicht können vorzugsweise in der Höhe verstellbar ausgebildet sein, um die Schwingungswirkung der Schwingungsvorrichtung sowie die Massenwirkung des Gegengewichts auf den Beladungszustand des Membranpakets, dessen Anordnung im Rahmen sowie das Schwingungsverhalten des Rahmens abstimmen zu können.

Ein weiterer Aspekt der Erfindung ist die Verwendung einer Membranfiltrationsvorrichtung der zuvor beschriebenen Bauart zur Membranfiltration von biologisch belasteten Abwässern, die aus der Haltung von Nutztieren resultieren. Dieser Aspekt der Erfindung beruht auf der Erkenntnis, dass die bislang im Wesentlichen im labortechnischen Maßstab genutzten Membranfiltrationsvorrichtungen sich bei geeigneter Ausgestaltung und Anpassung auch für industrielle Reinigungszwecke im landwirtschaftlichen Bereich und insbesondere die Reinigung biologisch belasteter Abwässer eignet.

Gemäß eines weiteren Aspekts der Erfindung wird ein Verfahren zur Reinigung von biologisch belasteten Abwässern aus der landwirtschaftlichen Nutztierhaltung vorgeschlagen, welches die Schritte aufweist:
- Zuführen der Abwässer zu einem oder mehreren stromaufwärts von mehreren Membranfilterelementen liegenden Einlassraum/-räumen
- Filtern der Abwässer mittels der Membranfilterelemente,
- Ableiten der gefilterten Abwässer von einem stromabwärts der Membranfilterelemente liegenden Auslassraum/-räumen,
und welches insbesondere dadurch gekennzeichnet ist, dass die Membranfilterelemente in Schwingungen versetzt werden, deren Schwingungsrichtung parallel zur Ebene der Membranfilterelemente verläuft. Das erfindungsgemäße Verfahren beruht auf der Erkenntnis, dass biologisch belastete Abwässer aus der landwirtschaftlichen Nutztierhaltung in besonders effizienter Weise mit einer Mehrzahl von Membranfilterelementen gefiltert werden können, wenn die Membranfilterelemente in besonders wirksamer und effizienter Weise in Schwingungen versetzt werden und hierdurch hohe Scherkräfte zwischen dem zu reinigenden Abwasser und den Membranfilterelementen erzeugt werden. Dabei ist zu verstehen, dass die Schwingungen grundsätzlich auf jede konstruktive Weise auf die Membranfilterelemente übertragen werden können, insbesondere mittels einer direkten Anregung aus einer starren mit den Membranfilterelementen gekoppelten Schwingungsquelle.

Allerdings ist es besonders bevorzugt, dass die Membranfilterelemente mittels einer Schwingungsvorrichtung, vorzugsweise einer rotierenden Unwucht, die mit einem die Membranfilterelemente umgebenden Rahmen schwingsteif verbunden ist, in Schwingung versetzt werden und die Schwingung über vorzugsweise auf Druck vorgespannte Federn von dem Rahmen auf die Membranfilterelemente übertragen wird. Mit dieser Fortbildung wird eine für den angegebenen Einsatzzweck besonders effiziente und wirtschaftliche Art und Weise der Schwingungserregung für das erfindungsgemäße Verfahren eingesetzt, die auch eine Filterung von stark schadstoffbelasteten Abwässern mit hohem Anteil an Feststoffpartikeln ermöglicht.

Schließlich ist es besonders bevorzugt, wenn die Resonanzfrequenz des durch die Federn und die Membranfilterelemente gebildeten Schwingungssystem eingestellt wird, indem die Vorspannung, die Federkonstante, die wirksame Anzahl und/oder die wirksame Länge der Federn zwischen Rahmen und Membranpaket eingestellt wird. Mit dieser Fortbildung wird erreicht, dass durch Abstimmung der schwingungsrelevanten konstruktiven Parameter eine Resonanzfrequenz des Schwingungssystems aus Membranpaket und den Federn, welche dieses Membranpaket innerhalb des Rahmens in Schwingungsrichtung abstützen, erzielt wird. Hierdurch kann bei einem maximal reduzierten Energieeinsatz eine sehr hohe Schwingungswirkung erreicht werden.

Eine bevorzugte Ausführungsform der erfindungsgemäßen Membranfiltrationsvorrichtung wird anhand der beiliegenden Figuren beschrieben. Es zeigen:
- Fig. 1: eine perspektivische Ansicht einer ersten Ausführungsfornm erfindungsgemäßen Membranfiltrationsvorrichtung von schräg hinten oben,
- Fig. 2: eine perspektivische Ansicht einer zweiten Ausführungsform der erfindungsgemäßen Membranfiltrationsvorrichtung von schräg vorne,
- Fig. 3: eine perspektivische Ansicht der Membranfiltrationsvorrichtung nach Fig. 2 von schräg hinten, und.
- Fig. 4: eine horizontal geschnittene schematische Draufsicht auf eine erfindungsgemäße Membranfiltrationsvorrichtung nach Fig. 2.

Bezug nehmend auf die Figuren unterscheiden sich die beiden Ausführungsformen lediglich in der Art der Befestigung eines Gegengewichts und eines Motorengehäuses an einem Rahmen und werden zunächst bezüglich ihrer Gemeinsamkeiten nachfolgend zusammen beschrieben. Die erfindungsgemäße Membranfiltrationsvorrichtung ist auf einer Bodenplatte 10 angeordnet, die mittels mehrerer Doppel-T-Profile in einem Abstand oberhalb eines Bodens gehalten und durch Verschraubung der Doppel-T-Profile mit dem Boden auf diesem ortsfest verankert werden kann.

Auf der Oberseite der Bodenplatte 10 ist ein kubischer Rahmen 20 mittels Schwingungselementen 31-34 befestigt. Der kubische Rahmen 20 weist an seiner Unterseite vier zu einem Rechteck, insbesondere einem Quadrat verschweißte Profile auf, die vorzugsweise als L-Profile 21-24 ausgeführt sind. Die Schwingungselemente 31-34 sind in den jeweiligen Eckbereichen des aus den L-Profilen 21-24 gebildeten Quadrats an der Unterseite als jeweils gummielastische Elemente 31-34 zwischen Bodenplatte 10 und die L-Profilelemente eingesetzt und beidseits mit diesen verschraubt.

Aus jeder Ecke des durch die L-Profile 21-24 gebildeten Quadrats erstreckt sich in vertikaler Richtung jeweils ein Rahmenprofil 41-44 bis zu einer oberen Deckplatte 50, die mit vier wiederum zu einem Quadrat zusammengesetzten Profilen 51-54 verschweißt sind. Die oberen Enden der Rahmenprofile 41-44 sind mit den Profilen 51-55 in den Eckbereichen dieses Quadrats verschweißt.

Innerhalb des Rahmens, der durch die unteren und oberen zum Quadrat zusammengesetzten L-Profile und die Rahmenprofile 41-44 gebildet wird, ist ein Membranpaket 60 angeordnet. Das Membranpaket 60 setzt sich aus einer Vielzahl von baugleichen Membranträgerplatten zusammen, die aufeinander gestapelt und durch eine in vertikaler Richtung verlaufende Verspannung aufeinandergepresst werden. Hierdurch bilden die Membranträgerrahmen eine Wandung des Membranpakets aus, die das Membranpaket allseitig abschließt. Eine untere Bodenplatte und eine obere Deckelplatte schließen das Membranpaket nach oben bzw. unten ab. Innerhalb jedes Membranträgerrahmens sind jeweils zwei Membranfilterelemente angeordnet, die parallel und beabstandet zueinander liegen und ein Einlassraum zwischen sich einschließen. Zwischen dem jeweils oberen Membranfilterelement eines Membranhalterahmens und dem jeweils unteren Membranfilterelements eines darüber angeordneten, benachbarten Membranhalterahmens ist ein Auslassraum angeordnet. Alle Membranfilterelemente des Membranpakets sind parallel und beabstandet zueinander angeordnet und sind solcher Art ausgerichtet, dass die Erstreckungsrichtung der Rahmenprofile 41-44 senkrecht zur Ebene der Membranfilterelemente liegt. Das Membranpaket bildet auf diese Weise eine Vielzahl von Einlassräumen aus, die miteinander in direkter Fluidkommunikation stehen und mit einer am Membranpaket ausgebildeten Einlassöffnung in Verbindung stehen. Weiterhin sind innerhalb des Membranpakets eine Vielzahl von Auslassräumen ausgebildet, die wiederum miteinander in direkter Fluidkommunikation stehen und mit einer am Membranpaket ausgebildeten Auslassöffnung verbunden sind. Die Einlass- und Auslassräume stehen miteinander indirekt über die Membranfilterelemente in Verbindung, so dass Fluid vom Einlassraum in den Auslassraum gelangen kann, indem es ein Membranfilterelement passiert. Die Ausgestaltung der Membranfilterelemente und des hierdurch gebildeten Membranpakets kann insbesondere derjenigen entsprechen, die in US 4,952,317 oder US 6,322,698 beschrieben ist, diese Druckschriften werden diesbezüglich vollumfänglich in den Offenbarungsgehalt einbezogen.

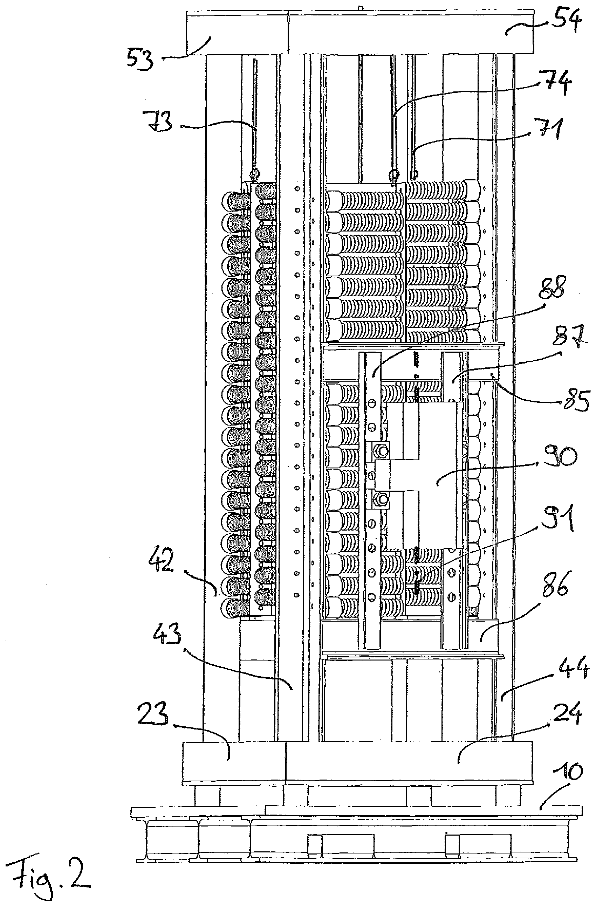

Das Membranpaket 60 ist in einem Membrangehäuse angeordnet, das als zylindrisches Rohr ausgebildet ist, sich entlang einer vertikal stehenden Symmetrieachse erstreckt und folglich einen runden Querschnitt in einer horizontalen Ebene aufweist. Am Außenumfang des Membrangehäuses sind sich vertikal erstreckende Seitenleisten 61-64 angeordnet, die mit einem Winkelabstand von jeweils 90° zueinander um den Umfang des Membrangehäuses verteilt sind und sich über die gesamte Länge des Rohres erstrecken. Grundsätzlich ist zu verstehen, dass der Innenquerschnitt des Membrangehäuses, in dem das Membranpaket angeordnet ist, der Membrankontur entsprechen sollte und folglich im Falle einer rechteckigen Membrankontur auch mit einem entsprechend rechteckigen Querschnitt ausgebildet sein kann. An Ober- und Unterseite ist das Membrangehäuse durch eine rechteckige, hier insbesondere quadratische Platte abgeschlossen. In vertikaler Richtung erstreckt sich das Membrangehäuse und folglich das Membranpaket 60 über eine geringere Länge als die Rahmenprofile 41-44. Das Membranpaket 60 ist in Bezug auf die Lage der Seitenleisten 61-64 gegenüber dem Rahmen solcher Art um 45° um die Vertikalachse verschwenkt und innerhalb des Rahmens angeordnet, dass die Seitenleisten 61-64 des Membranpakets 60 genau zwischen jeweils zwei Rahmenprofilen 41-44 zu liegen kommen. Wie aus Fig. 2 zu erkennen ist, bilden die Rahmenprofile 41-44 und ein durch Verbindung der Seitenleisten gedachter Querschnitt hierdurch im Horizontalquerschnitt ein Quadrat mit einem darin angeordneten Karo.

Jede Seitenleiste 61-64 weist einen nach außen stehenden Steg auf, der im Winkel von 90°, zu den Außenflächen des Membranpakets steht, also in einer radialen Ebene liegt.

Die Seitenleisten 61-64 des Membrangehäuses sind mit einer Vielzahl von Bohrungen versehen, in die jeweils ein Führungsbolzen fest eingesetzt und verschraubt ist, der sich in horizontaler Richtung parallel zur Membranfilterelementebene erstreckt.

Jedes Rahmenprofil 41-44 ist im Ausführungsbeispiel als L-Profil ausgeführt und trägt in jedem Schenkel des Ls ebenfalls eine Vielzahl von Bohrungen. Die Anzahl der Bohrungen in jedem Schenkel des Ls entspricht der Hälfte der Anzahl von Bohrungen, die in den Membranpaketleisten ausgebildet ist und der Abstand der Bohrungen im L-Profil voneinander ist doppelt so groß wie der Abstand der Bohrungen in den Membranpaketleisten. Die Bohrungen in den Rahmenprofilen 41-44 sind solcher Art ausgebildet, dass jeder Bohrung in den Rahmenprofilen 41-44 jeweils genau eine und nie die gleiche Bohrung in einer Membranpaketleiste gegenüberliegt.

In jeder Bohrung in den Rahmenprofilen 41-44 ist wiederum ein Führungsbolzen eingesetzt und verschraubt, der sich koaxial zu dem entsprechenden Führungsbolzen in der gegenüberliegenden Bohrung der Membranpaketleiste ausgerichtet ist.

Die Führungsbolzen dienen dazu, um Schraubenfedern 91-98 aufzunehmen und zu führen. Zwischen jeweils zwei koaxial liegende und zueinander weisende Führungsbolzen ist jeweils eine Schraubendruckfeder in vorgespannter Weise zwischen die Membranpaketleiste und das Rahmenprofil eingesetzt. Auf diese Weise erstrecken sich eine Vielzahl von Schraubendruckfedern zwischen jeder Membranpaketleiste und jedem Rahmenprofil, so dass die Membranpaketleisten sich in horizontal beide Richtungen von den Rahmenprofilen, zwischen denen sie jeweils angeordnet sind, abstützen.

Das Membranpaket 60 ist durch diese Ausgestaltung mittels insgesamt acht Sätzen von Schraubendruckfedern innerhalb des Rahmens eingespannt. Von diesen acht Sätzen sind vier Sätze parallel zueinander ausgerichtet und die anderen vier Sätze stehen senkrecht zu diesen ersten vier Sätzen und sind ebenfalls parallel zueinander ausgerichtet. Die Sätze von Schraubendruckfedern sind jeweils in der Ebene einer fiktiven Seitenwand angeordnet, die sich zwischen zwei benachbarten Rahmenprofilen 41-44 ausbilden würde.

Das Membranpaket 60 ist mittels vier Stahlseilen 71-74, die an den oberen vier Ecken des Membranpakets befestigt sind, an den oberen Profilen 51-54 des Rahmens aufgehängt. Die vier Stahlseile 71-74 tragen die gesamte Gewichtskraft des Membranpakets, so dass die auf Druck vorgespannten Schraubenfedern keine vertikalen Lasten aufnehmen müssen.

An den Rahmenprofilen 43, 44 sind ein oberer und ein unterer Querträger 85, 86 angeschweißt. Zwischen den beiden eingesetzten Querträgern 85, 86 sind zwei sich in vertikaler Richtung erstreckende Längsprofile 87, 88 eingesetzt und starr mit den Querträgern 85, 86 verschweißt.

Ein Elektromotor 93 ist innerhalb eines Gehäuses 90 angeordnet. Das Gehäuse 90 und der Elektromotor 93 sind mit den beiden Längsprofilen 87, 88 verbunden, indem das Gehäuse mittels vier Schrauben unmittelbar und starr in vier entsprechende Bohrungen in den Längsprofilen verschraubt ist. Der Elektromotor ist auf diese Weise unmittelbar und starr mit dem durch die Rahmenprofile 41-44 gebildeten Rahmen verbunden und solcher Art ausgerichtet, dass seine Abtriebswelle um eine vertikale Achse 91 rotiert. Die Achse 91steht senkrecht zu den Membranfilterelementen. Auf der Abtriebswelle ist ein Gewicht 92 exzentrisch befestigt, das bei Rotation des Elektromotors eine Unwucht erzeugt. Der Elektromotor 90 und das Exzentergewicht an seiner Abtriebswelle sind mittels eines Gehäuses, in dem die Abtriebswelle entsprechend zusätzlich gelagert sein kann, um die durch die Rotation der Unwucht auftretetenden Kräfte aufzunehmen, vollständig gekapselt.

In den Längsprofilen 87, 88 sind mehrere Bohrungen in vertikal zueinander beabstandeter Weise angeordnet, so dass die Anordnung des Gehäuses 90 und des darin angeordneten Motors an den Längsprofilen in vertikaler Richtung in mehreren diskreten Abständen eingestellt werden kann. Auf diese Weise kann der Einbringungsort der Schwingungswirkung in vertikaler Richtung in diskreten Abständen verstellt werden indem das Gehäuse in mehreren, vertikal voneinander beabstandeten Positionen an den Längsprofilen 87, 88 verschraubt werden kann. Innerhalb des Gehäuses 90 ist der Elektromotor unterhalb des Exzentergewichts angeordnet. Dies ermöglicht es, das Exzentergewicht solcherart anzuordnen, dass es in einer Ebene rotiert, in der auch der Massenmittelpunkt des Membranpakets und des dieses umgebenden Membrangehäuses liegt. Dies bewirkt eine besonders effiziente Schwingung des Membranpakets, das heißt eine Schwingung, die mit wenig Energieaufwand erzeugt werden kann und die eine effiziente Scherbewegung an allen Membranflächen innerhalb des Membranpakets bewirkt.

Auf der den Rahmenprofilen 43, 44 gegenüberliegenden Seite sind in gleicher Weise zwischen den Rahmenprofilen 41, 42 ein oberer und ein unterer Querträger 81, 82 mit den Rahmenprofilen 41, 42 durch Schweißung starr verbunden.

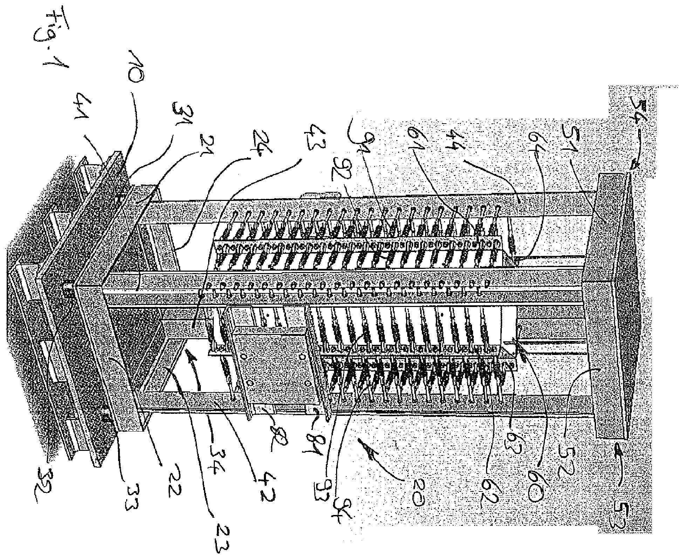

An diesen Querträgern 81, 82 ist bei der ersten Ausführungsform gemäß Figur 1 ein plattenförmiges Gegengewicht 100 unmittelbar und starr befestigt.

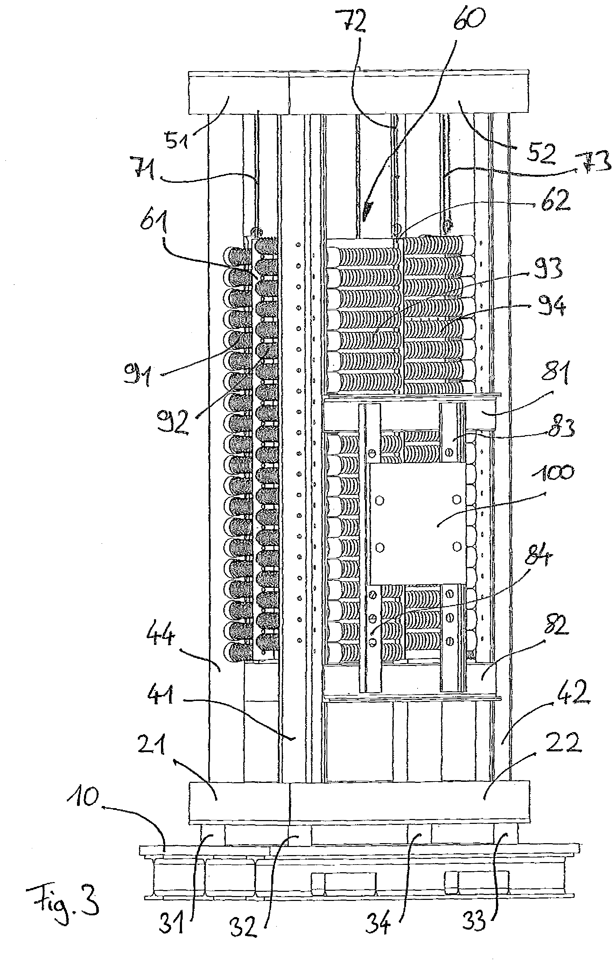

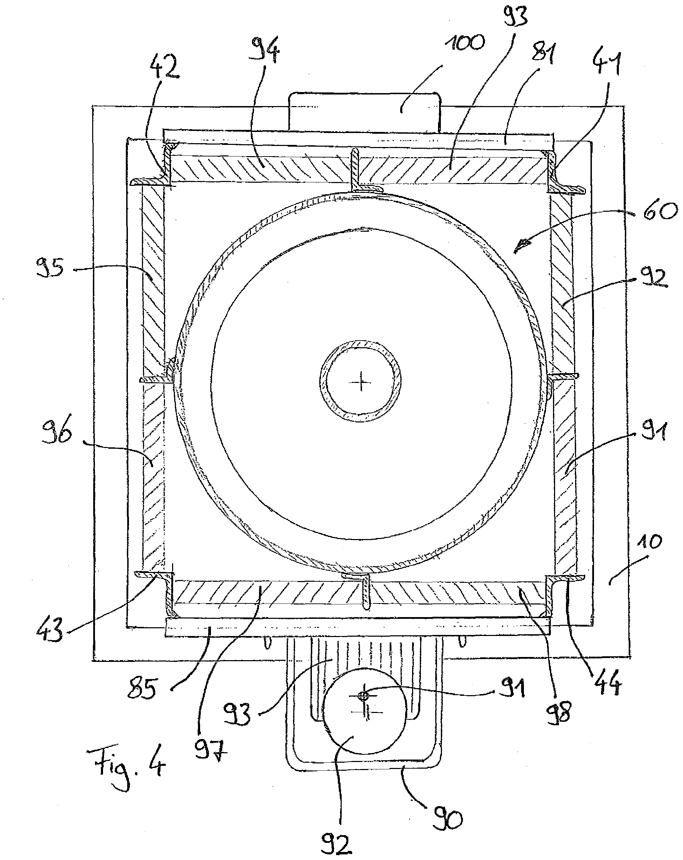

Bei der zweiten Ausführungsform gemäß den Figuren 2-4 sind zwischen den beiden eingesetzten Profilen 81, 82 zwei sich in vertikaler Richtung erstreckende Längsprofile 83, 84 eingesetzt und starr mit den Querprofilen 81, 82 verschweißt. Das Gegengewicht 100 ist bei dieser Ausführungsform wie der Elektromotor auf der anderen Seite mittels einer Mehrzahl von Bohrungen in den Längsträgern 83, 84 in der Höhe unterschiedlich montierbar und dadurch verstellbar bzw. an die Position des Exzentergewichts anpassbar.

Die Masse des Gegengewichts 100 entspricht der addierten Masse von Elektromotor, exzentrischem Gewicht und den horizontalen L-Profilen 83, 84. Dieses Gegengewicht dient dazu, das Schwingungsverhalten des Rahmens, welches durch die rotierende exzentrische Masse erzeugt wird, in solcher Weise auszubalancieren, dass das Membranpaket innerhalb der schwingenden Aufhängung im Rahmen in eine Resonanzschwingung versetzt werden kann.

## Patentansprüche

1. Membranfiltrationsvorrichtung, umfassend:
- eine Vielzahl von ebenen Membranfilterelementen, die zu einem Membranpaket verbunden und innerhalb des Membranpakets parallel und beabstandet zueinander angeordnet sind,
- eine das Membranpaket allseits umschließende Wandung, innerhalb welcher
o zumindest ein stromaufwärts von den Membranfilterelementen liegender Einlassraum ausgebildet ist, der mit zumindest einer Einlassöffnung zum Zuführen einer zu filternden Flüssigkeit in Verbindung steht, und
o zumindest ein stromabwärts von den Membranfilterelementen liegender Auslassraum ausgebildet ist, der mit zumindest einer Auslassöffnung zum Abführen eines durch Filterung entstehenden gefilterten Anteils der Flüssigkeit in Verbindung steht,
eine Schwingungseinheit, welche mit dem Membranpaket und der Wandung verbunden ist, um diese in einer Richtung in Schwingungen zu versetzen, die parallel zu den Membranfilterelementen verlaufen, und die mit einem Rahmen verbunden ist, der das Membranpaket umgibt und der mittels zumindest einer Feder, deren Hauptrichtung der Federwirkung sich parallel zur Ebene der Membranfilter erstreckt, mit der Wandung des Membranpakets verbunden ist,
**gekennzeichnet durch** mehrere Federn,
- deren Kraftwirkungsrichtung sich parallel zur Ebene der Membranfilterelemente erstreckt, insbesondere indem die Federn sich parallel zur Ebene der Membranfilterelemente erstrecken, und
- die an ihrem einen Ende mit der Wandung des Membranpakets und an ihrem anderen Ende mit dem Rahmen verbunden sind,
wobei die Federn in zumindest einen ersten Satz und einen zweiten Satz von Federn aufgeteilt sind und innerhalb jedes Satzes von Federn alle Federn parallel zueinander verlaufen und die Richtung der Federn eines Satzes schräg, vorzugsweise senkrecht zur Richtung der Federn eines anderen Satzes verläuft.

2. Membranfiltrationsvorrichtung nach Anspruch 1,
**dadurch gekennzeichnet, dass** die Federkonstante und die Länge sowie die Anzahl der Federn und die Schwingungseinheit solcherart auf die Masse des Membranpakets abgestimmt sind, dass die Schwingungseinheit das aus der zumindest einen Feder und dem Membranpaket gebildete Schwingungssystem in eine Schwingung bei einer seiner Resonanzfrequenzen bringen kann.

3. Membranfiltrationsvorrichtung nach dem vorhergehenden Anspruch,
**dadurch gekennzeichnet, dass** die Vorspannung, die Federkonstante, die wirksame Anzahl und/oder die wirksame Länge der Federn zwischen Rahmen und Membranpaket einstellbar ist, um die Resonanzfrequenz des durch die zumindest eine Feder und das Membranpaket gebildeten Schwingungssystem einstellen zu können.

4. Membranfiltrationsvorrichtung nach einem der vorhergehenden Ansprüche,
**dadurch gekennzeichnet, dass** das Membranpaket mittels Zugelementen, vorzugsweise Drahtseilen, innerhalb des Rahmens aufgehängt ist, welche die Gewichtskraft des Membranpakets auf den Rahmen übertragen.

5. Membranfiltrationsvorrichtung nach einem der vorhergehenden Ansprüche,
**gekennzeichnet durch** ein oder mehrere Dämpfungselemente, welche an der Unterseite des Rahmens angeordnet sind zum Anordnen der Membranfiltrationsvorrichtung auf einer Bodenfläche.

6. Membranfiltrationsvorrichtung nach einem der vorhergehenden Ansprüche,
**dadurch gekennzeichnet, dass** die Schwingungsvorrichtung einen Motor umfasst, der eine Welle antreibt, an der ein exzentrisches Gewicht angeordnet ist und dass der Motor vorzugsweise über eine Verbindung, deren Federkonstante um zumindest eine, vorzugsweise mehrere Größenordnungen steifer ist als die Federkonstante der zumindest einen Feder zwischen Rahmen und Membranpaket, mit dem Rahmen verbunden ist.

7. Membranfiltrationsvorrichtung nach einem der vorhergehenden Ansprüche,
**dadurch gekennzeichnet, dass** die zumindest eine Feder, vorzugsweise alle Federn zwischen Rahmen und Membranpaket auf Druck vorgespannt ist/sind.

8. Membranfiltrationsvorrichtung nach einem der vorhergehenden Ansprüche,
**dadurch gekennzeichnet, dass** die Schwingungsvorrichtung einen Motor umfasst, der eine Welle antreibt, an der ein exzentrisches Gewicht angeordnet ist, dessen Exzentrizität verstellbar ist zur Einstellung der Schwingungsamplitude des Membranpakets.

9. Membranfiltrationsvorrichtung nach Anspruch 6 oder 8,
**dadurch gekennzeichnet, dass** die Welle sich senkrecht zur Ebene der Membranfilterelemente erstreckt.

10. Membranfiltrationsvorrichtung nach einem der vorhergehenden Ansprüche,
**dadurch gekennzeichnet, dass** die Schwingungsvorrichtung ein um eine Achse rotierendes und exzentrisch zu dieser Achse angeordnetes Gewicht umfasst und der Massenmittelpunkt des Membranpakets in der Ebene liegt, in welcher das Gewicht rotiert, insbesondere indem diese Ebene durch eine stufenlose oder diskret verstellbare Verbindung zwischen dem Exzentergewicht und dem Rahmen relativ zum Membranpaket verstellt werden kann.

11. Membranfiltrationsvorrichtung nach einem der vorhergehenden Ansprüche,
**dadurch gekennzeichnet, dass** die Gewichtskraft des Membranpakets auf einen oder mehrere Punkte am Rahmen übertragen wird, die in Schwerkraftrichtung oberhalb des Massenschwerpunktes des Membranfilterelements liegt/liegen.

12. Membranfiltrationsvorrichtung nach einem der vorhergehenden Ansprüche,
**dadurch gekennzeichnet, dass** die Schwingungsvorrichtung an einer Seite des Rahmens befestigt ist und an der gegenüberliegenden Seite ein Gegengewicht starr am Rahmen befestigt ist, dessen Masse vorzugsweise der Masse der Schwingungsvorrichtung entspricht.

13. Verwendung einer Vorrichtung nach einem der Ansprüche 1-12 zur Reinigung von biologisch belasteten Abwässern aus der landwirtschaftlichen Nutztierhaltung.

14. Verfahren zur Reinigung von biologisch belasteten Abwässern aus der landwirtschaftlichen Nutztierhaltung mit einer Membranfiltrationsvorrichtung nach einem der Ansprüche 1-12, mit den Schritten:
- Zuführen der Abwässer zu einem oder mehreren stromaufwärts von mehreren Membranfilterelementen liegenden Einlassraum/-räumen,
- Filtern der Abwässer mittels der Membranfilterelemente,
- Ableiten der gefilterten Abwässer von einem stromabwärts der Membranfilterelemente liegenden Auslassraum/-räumen,
dadurch gekenzeichnet, dass die Membranfilterelemente in Schwingungen versetzt werden, deren Schwingungsrichtung parallel zur Ebene der Membranfilterelemente verläuft.

15. Verfahren nach Anspruch 14,
**dadurch gekennzeichnet, dass** die Membranfilterelemente mittels einer Schwingungsvorrichtung, vorzugsweise einer rotierenden Unwucht, die mit einem die Membranfilterelemente umgebenden Rahmen schwingsteif verbunden ist, in Schwingung versetzt werden und die Schwingung über vorzugsweise auf Druck vorgespannte Federn von dem Rahmen auf die Membranfilterelemente übertragen wird.

16. Verfahren nach Anspruch 14 oder 15,
**dadurch gekennzeichnet, dass** die Resonanzfrequenz des durch die Federn und die Membranfilterelemente gebildeten Schwingungssystem eingestellt wird, indem die Vorspannung, die Federkonstante, die wirksame Anzahl und/oder die wirksame Länge der Federn zwischen Rahmen und Membranpaket eingestellt wird.

## Claims

1. A membrane filtration device, comprising
- a plurality of planar membrane filter elements which are combined to form a membrane package and are disposed within the membrane package parallel to and spaced apart from one another,
- a wall which encloses the membrane package on all sides, and within which
o at least one inlet chamber is formed upstream from the membrane filter elements, which is connected to at least one inlet opening for feeding a fluid to be filtered, and
o at least one outlet chamber is formed downstream from the membrane filter elements, which is connected to at least one outlet opening for discharging a filtered fluid portion produced by filtration,
an oscillation unit which is connected to the membrane package and the wall to make them oscillate in a direction parallel to the membrane filter elements, and which is connected to a frame which surrounds the membrane package and which is connected to the wall of the membrane package by means of least one spring whose main direction of spring action extends parallel to the plane of the membrane filter,
**characterized by** a plurality of springs,
- whose direction of force application extends parallel to the plane of the membrane filter elements, in particular in that the springs extend parallel to the plane of the membrane filter elements, and
- which are connected at their one end to the wall of the membrane package and at their other end to the frame,
wherein the springs are subdivided into at least one first set and one second set of springs and that all the springs within each set of springs extend parallel to each other and that the direction of the springs in one set extend at an angle and preferably perpendicular to the direction of the springs of another set.

2. The membrane filtration device according to claim 1,
**characterized in that** the spring constants and the length and the quantity of the springs and the oscillation unit are adapted in such a way to the mass of the membrane package that the oscillation unit is able to make the oscillation system consisting of the at least one spring and the membrane package oscillate at one of its resonance frequencies.

3. The membrane filtration device according to the preceding claim,
**characterized in that** the bias, the spring constants, the effective quantity and/or the effective length of the springs between the frame and the membrane package can be adjusted in order to set the resonance frequency of the oscillation system formed by the at least one spring and the membrane package.

4. The membrane filtration device according to any one of the preceding claims,
**characterized in that** the membrane package is suspended inside the frame by means of traction members, preferably wire cables, which transfer the weight force of the membrane package to the frame.

5. The membrane filtration device according to any one of the preceding claims,
**characterized by** one or a plurality of damping members which are arranged on the underside of the frame for disposing the membrane filtration device on a bottom surface.

6. The membrane filtration device according to any one of the preceding claims,
**characterized in that** the oscillation device includes a motor which drives a shaft on which an eccentric weight is disposed, and that the motor is preferably connected to the frame by a connection having a spring constant that is at least one and preferably several orders of magnitude stiffer than the spring constant of the at least one spring between the frame and the membrane package.

7. The membrane filtration device according to any one of the preceding claims,
**characterized in that** the at least one spring and preferably all the springs between the frame and the membrane package is/are biased to exert pressure.

8. The membrane filtration device according to any one of the preceding claims,
**characterized in that** the oscillation device includes a motor which drives a shaft on which an eccentric weight is disposed, the eccentricity of which is adjustable in order to set the oscillation amplitude of the membrane package.

9. The membrane filtration device according to claim 6 or claim 8,
**characterized in that** the shaft extends perpendicular to the plane of the membrane filter elements.

10. The membrane filtration device according to any one of the preceding claims,
**characterized in that** the oscillation device includes a weight which rotates about an axis and is disposed eccentric to said axis and the centre of mass of the membrane package lies in the plane in which the weight rotates, in particular **in that** said plane can be adjusted relative to the membrane package by means an infinitely variable or discretely adjustable connection between the eccentric weight and the frame.

11. The membrane filtration device according to any one of the preceding claims,
**characterized in that** the weight force of the membrane package is transferred to one or more points on the frame which lie above the centre of mass of the membrane filter element in the direction of gravity.

12. The membrane filtration device according to any one of the preceding claims,
**characterized in that** the oscillation device is fixed to one side of the frame and that a counterweight whose mass is preferably equal to the mass of the oscillation device is rigidly fixed to the frame on the opposite side.

13. The use of a device according to any one of claims 1 to 12 to clean biologically contaminated wastewater from agricultural livestock husbandry.

14. A method for cleaning biologically contaminated wastewater from agricultural livestock husbandry with a membrane filtration device according to any one of claims 1 to 12, comprising the steps of:
- feeding the wastewater to one or a plurality of inlet chambers disposed upstream from a plurality of membrane filter elements,
- filtering the wastewater by means of the membrane filter elements,
- discharging the filtered wastewater from an outlet chamber or chambers disposed downstream from the membrane filter elements,
**characterized in that** the membrane filter elements are made to oscillate such that the direction of oscillation is parallel to the plane of the membrane filter elements.

15. The method according to claim 14,
**characterized in that** the membrane filter elements are made to oscillate by means of an oscillation device, preferably a rotating unbalance, which is connected stiffly to a frame enclosing the membrane filter elements, and the oscillation is transferred from the frame to the membrane filter elements by springs which are preferably biased to exert pressure.

16. The method according to claim 14 or 15,
**characterized in that** the resonance frequency of the oscillation system formed by springs and the membrane filter elements is set by adjusting the bias, the spring constants, the effective quantity and/or the effective length of the springs between the frame and the membrane package.

## Revendications

1. Dispositif de filtration à membrane, comprenant :
- un grand nombre d'éléments filtrants à membrane, plats, qui sont reliés en un paquet de membranes et sont agencés parallèlement les uns aux autres et mutuellement espacés les uns par rapport aux autres à l'intérieur du paquet de membranes,
- une paroi qui entoure de tous côtés le paquet de membranes et à l'intérieur de laquelle
o est formée au moins une chambre d'entrée, qui est située en amont des éléments filtrants à membrane et est en liaison avec au moins une ouverture d'entrée destinée à l'amenée d'un liquide à filtrer, et
o est formée au moins une chambre de sortie, qui est située en aval des éléments filtrants à membrane et est en liaison avec au moins une ouverture de sortie destinée à l'évacuation d'une fraction filtrée du liquide obtenu par filtration,
une unité d'oscillation, qui est reliée au paquet de membranes et à la paroi pour leur conférer des oscillations dans une direction s'étendant parallèlement aux éléments filtrants à membrane, et qui est reliée à un cadre entourant le paquet de membranes et relié à la paroi du paquet de membranes, au moyen d'au moins un ressort dont la direction principale de l'action du ressort s'étend parallèlement au plan des filtres à membrane,
**caractérisé**
**par** plusieurs ressorts
- dont la direction d'action de la force s'étend parallèlement au plan des éléments filtrants à membrane, notamment grâce au fait que les ressorts s'étendent parallèlement au plan des éléments filtrants à membrane, et
- qui, au niveau d'une extrémité, sont reliés à la paroi du paquet de membranes, et, au niveau de leur autre extrémité, sont reliés au cadre,
et en ce que les ressorts sont répartis en au moins un premier jeu et un deuxième jeu de ressorts, et à l'intérieur de chaque jeu de ressorts, tous les ressorts s'étendent parallèlement les uns aux autres, et la direction des ressorts d'un jeu s'étend de manière oblique, de préférence perpendiculairement, par rapport à la direction des ressorts d'un autre jeu de ressorts.

2. Dispositif de filtration à membrane selon la revendication 1,
**caractérisé en ce que** la constante de rappel et la longueur ainsi que le nombre des ressorts et l'unité d'oscillation sont adaptés de manière telle à la masse du paquet de membranes, que l'unité d'oscillation soit en mesure de conférer au système oscillant, qui est formé par ledit au moins un ressort et le paquet de membranes, une oscillation à l'une de ses fréquences de résonnance.

3. Dispositif de filtration à membrane selon la revendication précédente,
**caractérisé en ce que** la précontrainte, la constante de rappel, le nombre actif et/ou la longueur active des ressorts entre le cadre et le paquet de membranes, est réglable en vue de pouvoir régler la fréquence de résonnance du système oscillant formé par ledit au moins un ressort et le paquet de membranes.

4. Dispositif de filtration à membrane selon l'une des revendications précédentes,
**caractérisé en ce que** le paquet de membranes est suspendu à l'intérieur du cadre au moyen d'éléments de traction, de préférence des câbles d'acier, qui transmettent la force de gravité du paquet de membranes au cadre.

5. Dispositif de filtration à membrane selon l'une des revendications précédentes,
**caractérisé par** un ou plusieurs éléments d'amortissement, qui sont agencés sur le côté inférieur du cadre, pour agencer le dispositif de filtration à membrane sur une surface de sol.

6. Dispositif de filtration à membrane selon l'une des revendications précédentes,
**caractérisé en ce que** le dispositif d'oscillation comprend un moteur, qui entraîne un arbre sur lequel est agencé une masselotte excentrée, et **en ce que** le moteur est relié au cadre, de préférence par l'intermédiaire d'une liaison dont la constante de rappel est plus rigide d'au moins un, de préférence plusieurs ordres de grandeur que la constante de rappel dudit au moins un ressort entre le cadre et le paquet de membranes.

7. Dispositif de filtration à membrane selon l'une des revendications précédentes,
**caractérisé en ce que** ledit au moins un ressort, de préférence tous les ressorts, entre cadre et paquet de membranes, est/sont précontraints en compression.

8. Dispositif de filtration à membrane selon l'une des revendications précédentes,
**caractérisé en ce que** le dispositif d'oscillation comprend un moteur, qui entraîne un arbre sur lequel est agencé une masselotte excentrée, dont l'excentricité peut être réglée en vue du réglage de l'amplitude d'oscillation du paquet de membranes.

9. Dispositif de filtration à membrane selon la revendication 6 ou la revendication 8,
**caractérisé en ce que** l'arbre s'étend perpendiculairement au plan des éléments filtrants à membrane.

10. Dispositif de filtration à membrane selon l'une des revendications précédentes,
**caractérisé en ce que** le dispositif d'oscillation comprend une masselotte en rotation autour d'un axe et agencée de manière excentrée par rapport à cet axe, et le centre de gravité du paquet de membranes se situe dans le plan dans lequel tourne la masselotte, notamment par le fait que ce plan peut être réglé par rapport au paquet de membranes par une liaison réglable en continu ou de manière discrète, entre la masselotte excentrée et le cadre.

11. Dispositif de filtration à membrane selon l'une des revendications précédentes,
**caractérisé en ce que** la force de gravité du paquet de membranes est transmise à un ou plusieurs points sur le cadre, qui se situe/situent, en se référant à la direction de la force de gravité, au-dessus du centre de de gravité de l'élément filtrant à membranes.

12. Dispositif de filtration à membrane selon l'une des revendications précédentes,
**caractérisé en ce que** le dispositif d'oscillation est fixé sur un côté du cadre, et sur le côté opposé est fixé de manière rigide sur le cadre, un contrepoids dont la masse correspond de préférence à la masse du dispositif d'oscillation.

13. Utilisation d'un dispositif selon l'une des revendications 1-12, pour assurer l'épuration d'eaux usées contaminées biologiquement, en provenance de l'élevage d'animaux en agriculture.

14. Procédé d'épuration d'eaux usées contaminées biologiquement, en provenance de l'élevage d'animaux en agriculture, à l'aide d'un dispositif de filtration à membrane selon l'une des revendications 1-12, comprenant les étapes suivantes :
- amenée des eaux usées vers une ou plusieurs chambre(s) d'entrée située(s) en amont des plusieurs éléments filtrants à membrane,
- filtration des eaux usées au moyen des éléments filtrants à membrane,
- évacuation des eaux usées filtrées à partir d'une ou plusieurs chambre(s) de sortie située(s) en aval des éléments filtrants à membrane,
**caractérisé en ce que** l'on confère aux éléments filtrants à membrane des oscillations dont la direction d'oscillation s'étend parallèlement au plan des éléments filtrants à membrane.

15. Procédé selon la revendication 14,
**caractérisé en ce qu'**une oscillation est conférée aux éléments filtrants à membrane, au moyen d'un dispositif d'oscillation, de préférence un balourd en rotation, qui est relié de manière rigide sur le plan oscillatoire, à un cadre entourant les éléments filtrants à membrane, et l'oscillation est transmise du cadre aux éléments filtrants à membrane par des ressorts de préférence précontraints en compression.

16. Procédé selon la revendication 14 ou la revendication 15,
**caractérisé en ce que** la fréquence de résonance du système oscillant formé par les ressorts et les éléments filtrants à membrane est réglée grâce au fait que l'on règle la précontrainte, la constante de rappel, le nombre actif et/ou la longueur active des ressorts entre le cadre et le paquet de membranes.
